(19) Europäisches Patentamt
European Patent Office
Office européen des brevets

(11) **EP 4 660 658 A1**

(12) **EUROPEAN PATENT APPLICATION**

(43) Date of publication:
**10.12.2025 Bulletin 2025/50**

(21) Application number: **25181004.0**

(22) Date of filing: **05.06.2025**

(51) International Patent Classification (IPC):
*G01S 3/04* (2006.01)   *G01S 3/14* (2006.01)
*G01S 3/48* (2006.01)   *G01S 3/74* (2006.01)
*G01S 5/02* (2010.01)   *H04W 64/00* (2009.01)

(52) Cooperative Patent Classification (CPC):
**G01S 3/48; G01S 3/043; G01S 3/14;
G01S 5/02213; H04W 64/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.06.2024 FI 20245720**

(71) Applicant: **Wirepas Oy**
**33720 Tampere (FI)**

(72) Inventor: **Troccoli, Tiago**
**33100 Tampere (FI)**

(74) Representative: **Berggren Oy**
**P.O. Box 16**
**Fabianinkatu 21**
**00101 Helsinki (FI)**

(54) **AN INDOOR LOCALIZATION SOLUTION**

(57)   The invention relates to an anchor device (302a-302n) for indoor localization. The anchor device (302a-302n) comprises: an antenna array (500), a radio communicator part (600) comprising at least one RF front end (610, 610a, 610b) and a radio frequency (RF) switch (620, 620a, 620b) for each RF front end (610, 610a, 610b), and a controller (630). The anchor device (302a-302n) is configured to: receive OFDM signal (301a) comprising at least one DOA estimation OFDM symbol (640, 640a, 640b) transmitted by a tag device (304a) being localized, wherein the at least one RF switch (620, 620a, 620b) is configured to sample the received OFDM signal (301a) sequentially from the antenna elements of the antenna array (500), and wherein the number of the antenna elements is higher than the number of RF front ends (610, 610a, 610b) times the number of the DOA estimation OFDM symbols (640, 640a, 640b); and apply a phase compensated DOA estimation to determine an estimate of the DOA comprising two angles of arrival and to compensate a phase shift caused by the sequential sampling of the received OFDM signal (301a). The invention relates also to an indoor localization system (300), an indoor localization method, a computer program, a computer readable medium.

FIG. 6A

EP 4 660 658 A1

**Description**

TECHNICAL FIELD

The invention concerns in general the technical field of wireless communication networks. Especially the invention concerns indoor localization for wireless communication networks.

BACKGROUND

Different direction of arrival (DOA) estimation methods may be found in many applications, such as medical appliances, radar, navigation, military devices, and different indoor localization systems including e.g. Internet of Things (IoT). Typically, in IoT radio communication systems supporting the indoor localization, the indoor localization system may comprise at least two types of devices (e.g. nodes). A first type of the devices are low-cost battery-powered constrained embedded devices, e.g. tag devices, that are being localized. The second type of devices are so-called anchor devices that are fixed in a known location and are used for determining positions of the tag devices. Each anchor device is typically equipped with an array of antennas that receive signals transmitted by the tag devices.

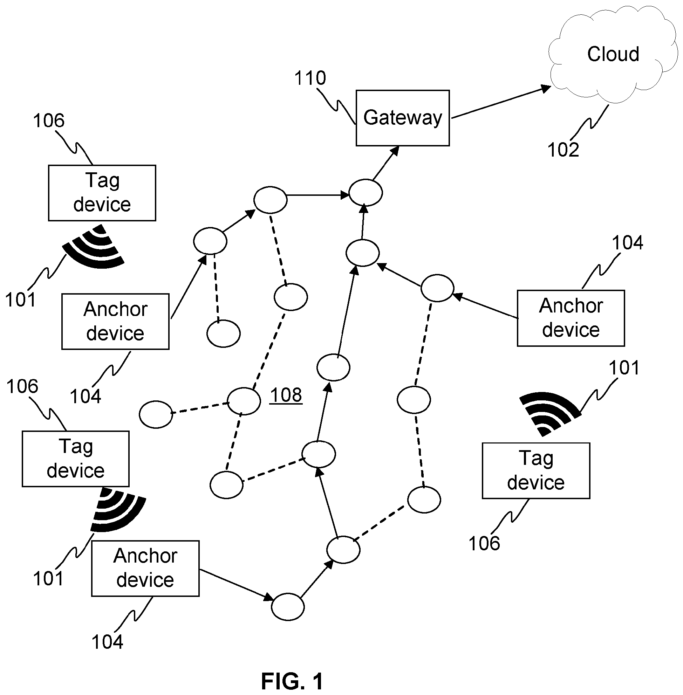

The anchor devices may estimate the DOA from the signals transmitted by the tag devices. Based on multiple DOAs from different anchor devices the locations of the tag devices may be determined. Due to an intrinsic complexity of traditional DOA estimation methods, a reasonable approach may be to execute the estimation of the DOAs in a cloud or by more powerful processing units such as separate processors at the anchor devices. That is impractical in some network topologies, such as mesh IoT networks. If the estimation of the DOAs is done in the cloud, the anchor devices would need to constantly transfer big chunks of measurement data (i.e. the signals) via a wireless communication network (e.g. a mesh network, such as mesh IoT network) to the cloud, e.g. from one node device of the wireless communication network to another node device of the wireless communication network until reaching the destination, i.e. the cloud. This consumes a significant amount radio resources of the wireless communication network and rapidly depleting batteries of the node devices of the wireless communication network. Figure 1 illustrates schematically an example of executing the traditional DOA estimation method. When the DOA estimation method is executed in the cloud 102, the anchor devices 104 transfer the measurement data (i.e. the signals) 101 received from the tag devices 106 via the wireless communication network (e.g. a mesh IoT network) 108 to the cloud 102, which then executes the DOA estimation and defines the localization of the tag devices 106 based on the estimated DOAs. The example wireless communication network 108 of Figure 1 comprises a plurality of node devices (illustrated with white circles forming the network 108 in Figure 1) and a gateway device 110 that operates as a gateway between the mesh IoT network 108 and the cloud 102.

The size of such chunks of measurement data may depend on the number of samples per antenna, number of bits per sample, and number of antennas, but it may easily exceed more than one kilobyte. Generally, when the number of antennas, the number of samples, and the number of bits per sample are increased, the more accurate is the DOA estimation and more accurate positioning estimation may be obtained, thus increasing the amount of data to be transferred to the cloud. Another possibility may involve deploying Ethernet cables to the anchor devices. However, that would require an increment in expenses of deployment, as the anchor devices would require wired connectivity. Similarly, using wireless broadband, i.e. Wi-Fi, would increase the price of the anchor devices and the deployment cost as each anchor device would need to have a Wi-Fi chip and each anchor device would need to be in the coverage range of Wi-Fi access point (AP). Additionally, transferring measurement data from a high number of tag devices from multiple anchor devices would consume a significant amount of Wi-Fi network resources.

If the more powerful processor unit is included in each anchor device, the amount of transferred data could be reduced. However, this would increase the cost of the anchor devices. The positioning accuracy based on the DOA is highly dependent on anchor device density and thus increasing the number of the anchor devices performing the DOA estimation for a single tag device may be beneficial. Thus, it is apparent that having a low-cost anchor device implementation as well as a low-cost anchor device deployment would be very attractive when the DOA method is used in large-scale deployments, such as large warehouses, factories, harbors, or even city-wide deployments.

When the DOA estimation method is executed in the anchor device 104, the anchor devices 104 receive the measurement data (i.e. the signals) 101 from the tag devices 106, executes the DOA estimation method, and sends the estimated DOAs of the received measurement data 101 via the wireless communication network (e.g. a mesh IoT network) 108 to the cloud 102, which then defines the localization of the tag devices 106 based on the estimated DOAs. When the DOA estimation is executed by the anchor devices, the anchor device would transfer e.g. only 2 - 8 bytes instead of kilobytes. However, the implementation of DOA estimation methods in the IoT networks poses a real challenge, since such devices are typically constrained embedded systems with limited computational resources. While in contrast, the DOA estimation methods are typically composed of resource-hungry and time-consuming complex numerical algorithms that may easily lead to a rapid depletion of batteries of the anchor devices, unacceptable execution time and/or computation resource and memory starvation. To achieve even lower cost and easy deployment capabilities, even in locations where mains power is not easily available, the anchor devices may be battery-powered, introducing stringed energy consumption requirements for the anchor devices. However, in such scenarios, the Wi-Fi connectivity, Ethernet cabling, and/or separate high-power processing units are not possible.

There exist several DOA estimation methods, such as Multiple Signal Classification (MUSIC), Space Alternating Generalized Expectation-Maximization (SAGE), Minimum Variance Distortionless Response (MDVR), and Estimation of Signal Parameters via Rotational Invariant Techniques (ESPRIT). ESPRIT is a class of subspace-based techniques and has multiple variations. The accuracy and the performance of the ESPRIT-based DOA estimation methods are superior in comparison to the DOA estimation methods based on beamforming techniques, such as the MDVR. An alternative approach of the DOA estimation methods based on the maximum likelihood approach has performance superior to the subspace-based DOA estimation methods, but the maximum likelihood estimation methods have a very high computational workload hindering their application in constrained embedded system which are prevalent in massive IoT networks.

In theory, the DOA estimation methods, e.g. the ESPRIT, may estimate multiple DOAs during their execution, so radar applications sending sounding signals and measuring when their own signal is received from different reflections may take full advantage of that capability by identifying multiple copies of their own reflected signal. However, in the IoT radio communication systems, where the anchor devices are employed to locate multiple tag devices, this is not possible in practice with low-cost single receiver anchor devices operating at a single radio frequency (RF) channel at a given time. That is, if more than one tag device transmits a signal to an anchor device, at the same time and frequency resources (e.g. channels), the signal-to-interference and noise ratio would be too low for the single receiver anchor device to detect the transmissions reliably. For example, the anchor device may not be able to decode the transmitter IDs of the tag devices reliably, as each transmission would interfere with the other transmissions. Therefore, in this scenario, the DOA estimation methods may only estimate a single DOA only.

SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present an anchor device, an indoor localization system, a method, a computer program, and a computer readable medium for indoor localization. Another objective of the invention is that the anchor device, the indoor localization system, the method, the computer program, and the computer readable medium for indoor localization enable reducing execution time, energy consumption, and memory footprint.

The objectives of the invention are reached by an anchor device, an indoor localization system, a method, a computer program, and a computer readable medium for indoor localization.

According to a first aspect, an anchor device for indoor localization, the anchor device is provided, wherein the anchor device comprises: an antenna array comprising a plurality of antenna elements, a radio communicator part comprising at least one radio frequency (RF) front end and an RF switch for each RF front end, and a controller, wherein the anchor device is configured to: receive, by the radio communicator part via the antenna array, Orthogonal Frequency Division Multiplexing (OFDM) signal comprising at least one direction of arrival (DOA) estimation OFDM symbol transmitted by a tag device being localized, wherein the at least one RF switch is configured to sample the received OFDM signal sequentially from the antenna elements of the antenna array, and wherein the number of the antenna elements of the antenna array is higher than the number of RF front ends of the radio communicator part times the number of the DOA estimation OFDM symbols of the ODFM signal; and apply, by the controller, a phase compensated DOA estimation to determine based on the received OFDM signal an estimate of the DOA comprising two angles of arrival and to compensate a phase shift caused by the sequential sampling of the received OFDM signal.

The phase compensated DOA estimation may comprise that the anchor device is configured to: determine an estimate of a frequency response of each antenna element of the antenna array based on the samples of the received OFDM signal from each antenna element by applying Discrete Fourier Transform (DFT), determine phase compensated frequency responses of the antenna elements based on the estimates of frequency responses by applying a phase compensation, determine DOA information based on the phase compensated frequency responses, and determine the estimate of the DOA based on the determined DOA information.

The determining the DOA information may comprise that the anchor device is configured to: determine a sampled cross-spectral density (CSD) matrix representing phase compensated frequency responses of the dominant component of the OFDM signal based on the phase compensated frequency responses of the antenna elements, determine a signal subspace as the dominant eigenvector of the CSD matrix by applying a power method, and determine the DOA information based on the signal subspace by applying total least squares (TLS).

The dominant signal of the received OFDM signal may be a line-of-sight (LOS) signal.

The antenna array may be uniform and may have a dual shift-invariant characteristic.

The antenna array may be an L-shaped antenna array.

The number of the RF front ends of the radio communicator part may be one and the number of the DOA estimation OFDM symbols of the OFDM signal may be one.

The anchor device may further be configured to send the estimated DOA together with DOA metadata to a central entity via a wireless communication network for localizing the tag device being localized based on the estimated DOA and the DOA metadata.

The DOA metadata may comprise: an identifier of the anchor device, coordinates of the anchor device, an identifier of the tag device being localized, a received signal strength indicator (RSSI) information, and/or time information.

The antenna array may comprise at least one subarray so that the radio communicator part comprises a dedicated RF front end and RF switch for each subarray.

The at least one subarray may simultaneously sample the received OFDM signal, and within each subarray the antenna elements may sample the OFDM signal sequentially by using the respective RF switch.

According to a second aspect, an indoor localization system for a wireless communication network is provided, wherein the indoor localization system comprises: one or more tag devices, a central entity, and at least one anchor device described above.

According to a third aspect, an indoor localization method for the anchor device described above is provided, wherein the method comprises: receiving, by a radio communicator part of the anchor device via an antenna array comprising a plurality of antenna elements, Orthogonal Frequency Division Multiplexing (OFDM) signal comprising at least one direction of arrival (DOA) estimation OFDM symbol transmitted by a tag device being localized, wherein at least one RF switch of the radio communicator part samples the received OFDM signal sequentially from the antenna elements of the antenna array, and wherein the number of the antenna elements of the antenna array is higher than the number of RF front ends of the radio communicator part times the number of the DOA estimation OFDM symbols of the ODFM signal; and applying, by a controller of the anchor device, a phase compensated DOA estimation to determine based on the received OFDM signal an estimate of the DOA comprising two angles of arrival and to compensate a phase shift caused by the sequential sampling of the signal.

According to a fourth aspect, a computer program comprising instructions, which, when the computer program is executed by an anchor device as described above, cause the anchor device to carry out at least the steps of the method described above.

According to a fifth aspect, a tangible, non-transitory computer readable medium comprising the computer program as described above.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

BRIEF DESCRIPTION OF FIGURES

The embodiments of the invention are illustrated by way of example, and not by way of limitation, in the figures of the accompanying drawings.

Figure 1 illustrates schematically an example of executing a traditional direction of arrival (DOA) estimation method.

Figure 2 illustrates an example a wireless communication environment in which an indoor localization system may operate.

Figure 3 schematically illustrates an example of an indoor localization system, which operates in the wireless communication network.

Figure 4 illustrates schematically an example flow chart of an indoor localization method for the wireless communication network.

Figure 5 illustrates schematically an example configuration of antenna elements of an antenna array.

Figure 6A illustrates schematically a simple example configuration of a radio communicator part of the anchor device comprising a single RF front end.

Figure 6B illustrates schematically an example of an OFDM signal transmission, wherein the OFDM signal comprises one DOA estimation OFDM symbol.

Figure 6C illustrates schematically another simple example configuration of the radio communicator part of the anchor device comprising two RF front ends.

Figure 6D illustrates schematically another example of the OFDM signal transmission, wherein the OFDM signal comprises two DOA estimation OFDM symbols.

Figure 7A illustrates schematically an example of a Round Robin switching pattern of an L-shaped antenna array.

Figure 7B illustrates an example of a rectangular antenna array.

Figure 7C illustrates a DOA estimation OFDM symbol sampling process for the example antenna array of Figure 7B.

Figure 8A illustrates schematically an example flow chart of applying a phase compensated DOA estimation by the anchor device.

Figure 8B illustrates schematically an example flow chart of determining DOA information by the anchor device.

Figure 9A illustrates schematically an example of an L-shaped antenna array divided into virtual subarrays.

Figure 9B illustrates schematically an example of a cross shaped antenna array divided into virtual subarrays.

Figure 10 illustrates schematically an example of operational parts of the anchor device.

Figure 11 illustrates schematically an example of operational parts of a tag device.

DESCRIPTION OF THE EXEMPLIFYING EMBODIMENTS

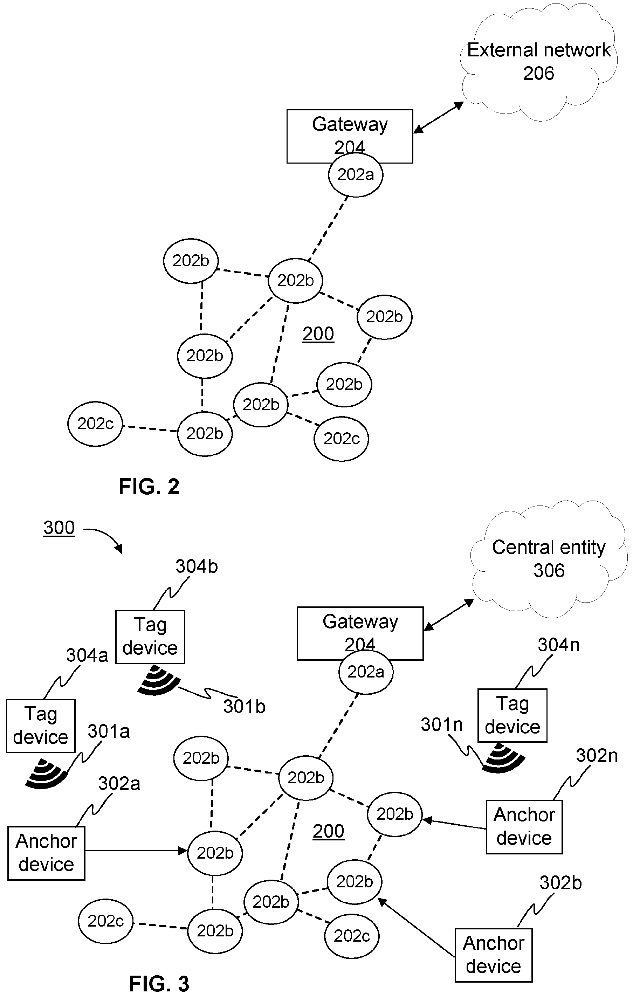

Figure 2 illustrates an example a wireless communication environment in which an indoor localization system 300 may operate. The environment comprises a wireless radio communication network (system) 200, which comprises a plurality of wireless radio communication devices (nodes) 202a-202c. The devices 202a-202c operate on a same spectrum comprising one or more frequency bands at a same geographical area, e.g. within the presented environment. Each of the one or more frequency bands may comprise one or more frequency channels. The use of same spectrum enables a bidirectional radio communication between the devices 202a-202c in the network 200, whereupon radio transmissions transmitted by one device 202a-202c may be received by another device 202a-202c and vice versa.

The indoor localization system 300 may be applied to any wireless communication network 200 using Orthogonal Frequency Division Multiplexing (OFDM). Preferably, the indoor localization system 300 may be applied to wireless communication networks 200 using OFDM that are having low capacity and/or low power consumption requirement. Some non-limiting examples of wireless communication networks 200 to which the indoor localization system 300 may be applied may comprise, but is not limited to, a wireless sensor network (WSN), a wireless communication network complying Digital European Cordless Telecommunications (DECT-2020 NR) standard, a Bluetooth Low Energy (BLE) mesh network, a Zigbee network, a Thread network, a Wireless Local Area Network (WLAN), and/or any other wireless communication networks using OFDM. Due to the low capacity and/or the low power consumption requirement in many use cases, transferring all measurement data from network nodes (e.g. tag devices) to a central entity (e.g. a cloud entity) having more processing power is not possible or causes degradation for other uses or services in the network 200.

As above has been explained, each device 202a-202c is able to provide, by means of its radio communicator, the bi-directional radio communication with at least one other device 202a-202c. This means that each device 202a-202c may operate as a transmitter, as a receiver, or as a transmitter-receiver when each device 202a-202c is able to transmit at least one message to other device(s) 202a-202c and to receive at least one message from the other device(s) 202a-202c in the network 200.

The network 200 may also comprise at least one gateway device 204, e.g. one, two, three, four, or more gateway devices. Each gateway device 204 operates as a gateway between the network 200 and other external network(s) 206, e.g. a central entity 306 and/or Internet, and delivers data in the network 200 and from the network 200. Each gateway device 204 communicates with at least one sink device (node) 202a, e.g. one, two, three, four, or more sink devices, and each sink device 202a operates as a radio interface for the gateway device 204 in the network 200. The at least one sink device 202a belongs to the plurality of devices 202a-202c of the network 200. Each sink device 202a may locate physically in connection with the gateway device 204 or separately in a different part of the network 200. If the gateway device 204 comprises several sink devices 202a, one may locate in connection with the gateway device 204 and others separately in different parts of the network 200.

The other devices 202b, 202c of the network 200 are able to operate in different fixed or non-fixed roles in the network 200. The other devices 202b, 202c in the network 200 are router devices (routers) 202b, i.e. devices operating in a router role, and non-router devices (non-routers) 202c, i.e. devices operating in a non-router role, depending on whether a device needs to participate in data forwarding. The sink devices 202a and the router devices 202b of the network 200 may participate in the routing operations. Each router device 202b maintains a connectivity of the network 200 and routes 202b forwards data of other devices 202a-202c when necessary. Each non-router device 202c is able to provide a bi-directional communication in order to transmit its own data and to receive data directed for it similarly as sink devices 202a and router devices 202b, but the non-router device 202c does not route data of other devices 202a-202c.

The network 200 comprises the devices 202b, 202c so that all devices 202b, 202c are not able or not preferring to communicate directly with the sink device(s) 202a due to radio conditions, e.g. extensive distance between the devices 202a-202c, interference or signal fading between the devices 202a-202c; or a limited radio range, whereupon it is necessary or preferred by the devices 202a-202c to use multi-link (multi-hop) communication between each device 202b, 202c and the sink device 202a.

Figure 3 illustrates schematically an example of an indoor localization system 300, which operates in the wireless communication network 200. The indoor localization system 300 comprises one or more anchor devices 302a-302n, one or more tag devices 304a-304n, and a central entity, e.g. a cloud entity, 306. The central entity 306 is in a bi-directional communication with the one or more anchor devices 302a-302n via the wireless communication network 200.

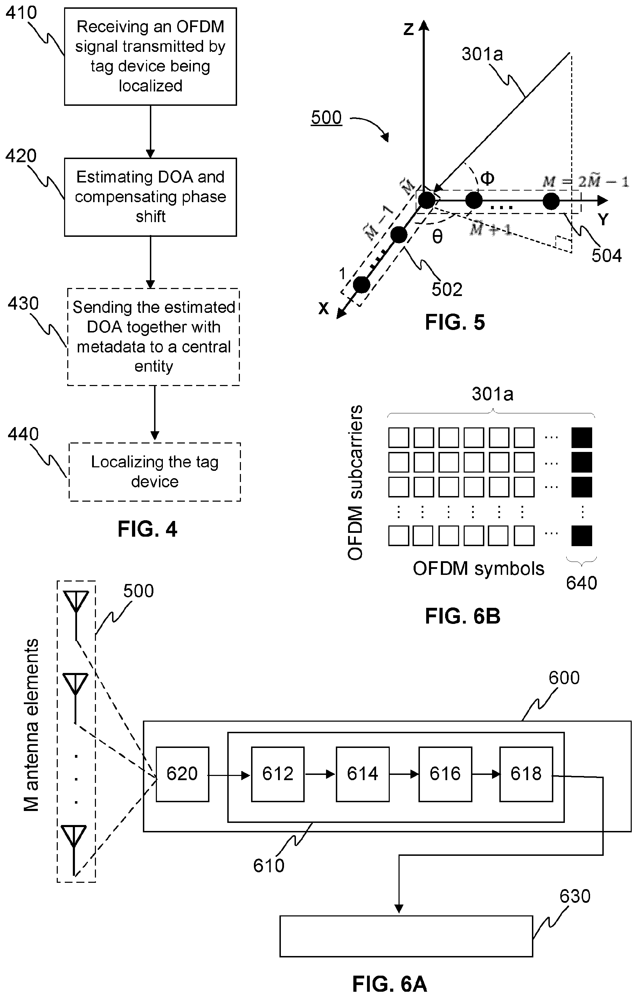

Figure 4 illustrates schematically an example of an indoor localization method for the wireless communication network 200. Figure 4 illustrates the indoor localization method as a flow chart. The indoor localization method is mainly explained by using one anchor device 302a and one tag device 304a being localized. However, each anchor device of the one or more anchor devices 302a-302n may be configured to independently perform one or more method steps (i.e. features) of the indoor localization method relevant to the anchor device as will be explained for the one anchor device 302a. Similarly, each tag device of the one or more tag devices 304a-304n may be configured to be localized as will be explained for the one tag device 304a. The indoor localization method is based on direction of arrival (DOA) estimation. The DOA estimation based indoor localization method described in this application may be considered as a modified ESPRIT.

At step 410, the anchor device 302a receives via an antenna array 500 an Orthogonal Frequency Division Multiplexing (OFDM) signal 301a comprising at least one DOA estimation OFDM symbol 640 transmitted by the tag device 304a being localized. In other words, the tag device 304a being localized transmits the OFDM signal comprising at least one DOA estimation OFDM symbol 640 to the anchor device 302a. The DOA estimation OFDM symbol 640 is an OFDM symbol of an OFDM signal that is used in the estimation of the DOA, i.e. an OFDM symbol of an OFDM signal, where the DOA estimation is done. In addition to the at least one DOA estimation OFDM symbol 640, the OFDM signal 301a comprises multiple other OFDM symbols (i.e. OFDM symbols that are not used in the estimation of the DOA). In other words, the OFDM signal 301a comprises a plurality of OFMD symbols, wherein the plurality of OFDM symbols comprises the at least one DOA estimation OFDM symbol and the multiple other OFDM symbols. The location of the at least one DOA estimation OFDM symbol 640 in the OFDM signal may differ. According to a non-limiting example, the at least one DOA estimation OFDM symbol 640 may be in the end of the OFDM signal. The OFDM signal 301a transmitted by the tag device 304a may for example comprise (e.g. carry) measurement data obtained by the tag device 304a. The ODFM signal 301a transmitted by the tag device 304a may for example traverse a channel characterized by multipath and time-invariant fading, along with Additive White Gaussian Noise (AWGN). The received OFDM signal 301a is a multipath signal comprising a line-of-sight (LOS) component and multiple multipath components (e.g. reflected components). In the DOA estimation, the DOA is estimated from the LOS component of the OFDM signal 301a as will be described later in this application.

Transmission of signals 301a-301n by the one or more tag devices 304a-304n of the indoor localization system 300 may be controlled so that one signal 301a is transmitted at a time on given radio resource (e.g. a frequency channel, or a code), wherein the tag device 304a transmitting said one signal 301a is the tag device 304a being localized. This enables that the transmission of signals 301a-301n by the one or more tag devices 304a-304n are controlled so that collisions of the signals 301a-301n transmitted by the one or more tag devices 304a-304n are avoided. The avoidance of the collision may be based on any collision avoidance technique. The given, e.g. predefined, radio resource may depend on the applied collision avoidance technique. The controlling of the transmission of the signals 301a-301n by the one or more tag devices 304a-304n may be based on using a medium access protocol (MAC) functionality. Any kind of MAC functionality may be used, as long as it provides means to identify the one or more transmitting tag devices 301a-301n and avoid collisions of the transmitted signals 301a-301n.

The MAC functionality may for example comprise using a random-access procedure or a scheduled procedure. In the random-access procedure, each router device 202b and sink device 202a of the network 200 announces its random-access channel (RACH) resources, i.e. coming timeslots when it receives data. The RACH resources may be included in beacon messages transmitted by said router/sink device 202a, 202n. Any device that wants to associate with said router/sink device 202a, 202b may then send their data (e.g. data packets comprising e.g. the measurement data, and/or association requests, etc.) during those time slots. The random-access procedure may comprise a use of a Listen Before Talk (LBT) technique and a random backoff. The router/sink device 202a, 202b announcing the time slots does not know which and how many devices are going to use them (i.e. send some data). Therefore, the devices attempting to send data may use the LBT and the random backoff to avoid collisions. The LBT is a short listening period used to check that any other device is not currently sending any data on that frequency channel. If the frequency channel is busy (i.e. another device is currently sending data on that frequency channel), the backoff (i.e. a randomized waiting period) is applied before the try to send the data again. If the frequency channel is not busy, the device is free to send the data. Aa an alternative to the random-access procedure, the scheduled procedure may be used, wherein a base station (BS), an access point (AP), or a router device 202b of the network 200 may schedule time reservations per transmitting device or group of transmitting devices. The use of the scheduling per device enables that the use of the LBT may be avoided. Although the features of the indoor localization method relevant to the tag device is explained by using one tag device 304a, each tag device of the one or more tag devices 304a-304n may be configured to independently perform one or more features relevant to the tag device as is explained for the one tag device 304a.

The antenna array 500 comprises a plurality of antenna elements. The number of antenna elements of the antenna array 500 is discussed more later in this application. The antenna array 500 has dual shift-invariant characteristic. The dual shift-invariant characteristic of the antenna array 500 enables shifting the position of the antenna elements of the antenna array 500 along two perpendicular directions without changing the radiation pattern of the antenna array 500. The antenna array 500 is a uniform array. Uniform antenna array comprises a plurality of antenna elements spaced at equal (i.e. uniform) distances, ensuring uniform distance between any two adjacent antenna elements. Preferably, the antenna array 500 is a planar antenna array. However, the antenna array 500 may also be a three-dimensional (3D) antenna array.

The antenna array 500 may have any configuration (i.e. shape) as long as the antenna array 500 is uniform and has the dual shift-invariant characteristics. Some non-limiting examples of the antenna array 500 are an L-shaped antenna array, a cross -shaped antenna array, a rectangular antenna array, a circular antenna array, a V-shaped antenna array, a T-shaped antenna array, etc. Preferably, the antenna array 500 is an L-shaped antenna array. The L-shaped antenna array allows a simpler structure with fewer antenna elements compared for example to traditional rectangular antenna arrays. Thus, the L-shaped antenna array offers a more economical and energy-efficient solution which is particularly beneficial in massive IoT applications.

Figure 5 illustrates schematically an example configuration of the antenna elements of the antenna array 500. The antenna array of the example of Figure 5 is an L-shaped uniform antenna array. The L-shaped uniform antenna array 500 is formed by two orthogonal uniform linear array parts, i.e. a first array part (e.g. an X-axis array part) 502 and a second array part (e.g. a Y-axis array part) 504. The antenna elements of the two array parts 502, 504 are illustrated with black circles in Figure 5. Each array part 502, 504 of the L-shaped uniform antenna array 500 comprises $\bar{M}$ antenna elements arranged in the XY-plane, totalling M = $2\bar{M}$ - 1 antenna elements. In other words, the X-axis array part 502 comprises $\bar{M}$ antenna elements arranged in the direction of the X-axis and the Y-axis array part 504 comprises $\bar{M}$ antenna elements arranged in the direction of the Y-axis. The array parts 502, 504 have an antenna element at the junction of the array parts 502, 504 in common. In the example of Figure 5, the $\bar{M}$ th antenna at the junction of the array parts 502, 504 is common for the X-axis array part 502 and the Y-axis array part 504. The distance between two adjacent antenna element is half of a carrier wavelength ($\lambda$) of the OFDM signal 301a.

A radio communicator part 600 of the anchor device 302a comprises at least one radio frequency (RF) front end 610 and an RF switch 620 respective for each RF front end 610. The number of the antenna elements (M) of the antenna array 500 depends on the number of the RF front ends 610 (R) of the radio communicator part 600 and the number of DOA estimation OFDM symbols 640 (L) of the OFDM signal 301a so that the number of the antenna elements is higher than the number of RF front ends 610 times the number of DOA estimation OFDM symbols 640, i.e. so that the condition M > R$\times$L is fulfilled. In other words, any combination where R$\times$L (i.e. the number of RF front ends 610 times the number of DOA estimation OFDM symbols 640) is lower than M (i.e. the number of antenna elements) is possible. Reducing the number of the RF front ends 610 makes the configuration more inexpensive in terms of hardware due to the reduced number of RF components, decreases power consumption, physical size, and overall cost of the anchor device 302a. Reducing the number of DOA estimation OFDM symbols 640, in turn, makes the configuration more inexpensive in terms of radio resources due to the reduced number of the DOA estimation OFDM symbols 640, and decreases the power consumption, because the transmission length of the OFDM signal 301a decreases, when the number of the OFDM symbols decreases. Preferably, the radio communicator part 600 comprises a single RF front end 610 (i.e. R is 1) and the OFDM signal 301a comprises one DOA estimation OFDM symbol 640 (i.e. L is 1). This is the most inexpensive configuration in terms of hardware and radio resources, because the number of the RF front ends 610 and DOA estimation OFDM symbols 640 are minimized.

Figure 6A illustrates schematically a simple example configuration of the radio communicator part 600 of the anchor device 302a comprising a single RF front end 610 and thus also a single RF switch 620. The RF front end 610 of the example of Figure 6A comprises an analog-to-digital converter (ADC) 618, a filter (e.g. a channel filter) 616, a down converter 614, and a low-noise amplifier (LNA) 612. The RF front end 610 may alternatively or in addition comprise one or more other known RF front end components. The RF front end 610 of the radio communicator part 600 is connected to a controller 630 of the anchor device 302a. The controller 630 controls the switching operation of the RF switch 620 among other things. Figure 6B illustrates schematically an example of an OFDM signal transmission, wherein the OFDM signal 301a comprises one DOA estimation OFDM symbol 640. In Figure 6B, the DOA estimation OFDM symbol 640 is illustrated with the black squares and the other OFDM symbols of the OFDM signal are illustrated with white squares. When the OFDM signal transmission according to the example of Figure 6B is used with the example configuration of the radio communicator part according to the example of Figure 6A, the number of the antenna elements of the antenna array 500 may be two or more to fulfil the the condition $M > R \times L$. With the combination of the single RF front end 610 configuration and the single DOA estimation OFDM symbol 640, the single DOA estimation OFDM symbol 640 is used to take samples for the DOA estimation from all antenna elements by the single RF front end 610 with the single RF switch 620. In other words, with the combination of the single RF front end 610 configuration and the single DOA estimation OFDM symbol 640, the RF switch 620 is used to switch the single RF front end 610 between all antenna elements inside the single OFDM symbol 640.

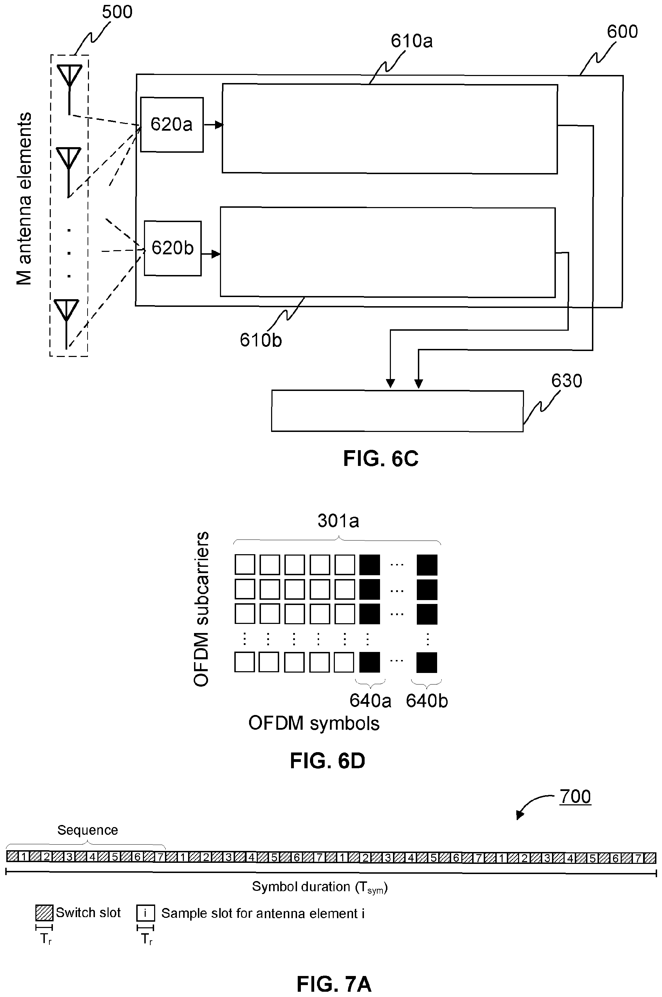

Figure 6C illustrates schematically another simple example configuration of the radio communicator part 600 of the anchor device 302a comprising two RF front ends 610a, 610b (e.g. a first RF front end 610a and a second RF front end 610b) and thus also two RF switches 620a, 620b (e.g. a first RF switch 620a and a second RF switch 620b). The RF front ends 610a, 610b of Figure 6C correspond to the RF front end 610 of the example of Figure 6A. For sake of simplicity, the components of the RF front ends 610a, 610b are thus not shown in Figure 6C. In the example of Figure 6C The RF front ends 610a, 610b of the radio communicator part 600 are connected to the controller 630 of the anchor device 302a similarly as the RF front end 610 in the example of Figure 6A. Figure 6D illustrates schematically another example of an OFDM signal transmission, wherein the OFDM signal 301a comprises two DOA estimation OFDM symbols 640a, 640b (e.g. a first OFDM symbol 640a and a second OFDM symbol 640b). In Figure 6D, the DOA estimation OFDM symbols 640a, 640b are illustrated with the black squares and the other OFDM symbols of the OFDM signal are illustrated with white squares. When the OFDM signal transmission according to the example of Figure 6D is used with the example configuration of the radio communicator part according to the example of Figure 6C, the number of the antenna elements of the antenna array 500 may be five or more to fulfil the the condition $M > R \times L$. With the combination of the two RF front ends 610a, 610b configuration and the two DOA estimation OFDM symbols 640a, 640b, the two DOA estimation OFDM symbols 640 are used to take samples for the DOA estimation from multiple antenna elements by the two RF front ends 610a, 610b with the two RF switches 620a, 620b. For example, the first RF switch 620a may be used to switch the first RF front end 610a between multiple antenna elements inside the first OFDM symbol 640a and the second RF switch 620b may be used to switch the second RF front end between multiple antenna elements inside the second OFDM symbol 640b.

As discussed above, the radio communicator part 600 comprises an RF switch 620, 620a, 620b respective for each RF front end 610, 610a, 610b. In other words, the radio communicator part 600 comprises at least one RF switch 620, 620a, 620b, wherein the number of RF switches corresponds to the number of RF front ends 610, 610a, 610b. The at least one RF switch 620, 620a, 620b samples the received OFDM signal 301a sequentially from the antenna elements of the antenna array 500 in a time-division manner. By means of the at least one RF switch 620, 620a, 620b the OFDM signal 301a can be sampled from all the antenna elements of the array 500, albeit not simultaneously. The sequential sampling of the received OFDM signal 301a causes a phase shift between the samples. At least one RF switch 620, 620a, 620b may sample the received signal 301a sequentially from the antenna elements of the antenna array 500 according to a predefined switching pattern 700. The predefined switching pattern 700 may for example be a Round-Robin switching pattern, a reverse Round-Robin switching pattern, or a direction changing Round-Robin switching pattern. However, also any other suitable switching patterns may be used to sequentially sample the received OFDM signal 301a from the antenna elements of the antenna array 500 in an orderly manner. The predefined switching pattern 700 may be stored into a memory part 1034 of the anchor device 302a as discussed above. The received OFDM signal 301a may be time-divided into an alternate series of sample and switch slots. The ODFM signal 301a is sampled in the sample slot and the switch occurs in the switch slot. The switching pattern 700 depends on the antenna configuration, the number of antenna elements, the number of the RF front ends 600, the number of DOA estimation OFDM symbols. Figure 7A illustrates schematically an example of the Round Robin switching pattern 700 of an L-shaped antenna array. The example L-shaped antenna array 500 in Figure 7A comprises seven antenna elements. The example Round Robin switching pattern 700 is applicable for an example configuration of the radio communicator part 600 of the anchor device 302a comprising one RF front end 600 (i.e. R=1) together with an example OFDM signal transmission comprising a single DOA estimation OFDM symbol 640. During each sequence of the Round-Robin, the first antenna element samples first, followed by the second, and so on until the last antenna element. The sequence is repeated until the DOA estimation OFDM symbol 640 ends.

When the radio communicator part 600 of the anchor device 302a comprises multiple RF front ends 610, 610a, 610b the antenna array 500 may comprise multiple subarrays 702, 704, 706, where each subarray 702, 704, 706 has a dedicated RF front end 610, 610a, 610b and RF switch 620, 620a, 620b. In other words, the radio communicator part 600 comprises a dedicated RF front end 610, 610a, 610b and RF switch 620, 620a, 620b for each subarray 702, 704, 706. The multiple subarrays 702, 704, 706 are non-overlapping subarrays. The subarrays 702, 704, 706 may also be called as physical subarrays. In case the radio communicator part 600 of the anchor device 302a comprises one RF front end 610, 610a, 610b, the number of subarrays 702, 704, 706 may be considered to be one. Therefore, the antenna array 500 may comprise at least one subarray 702, 704, 706. The subarrays 702, 704, 706 simultaneously sample the received OFDM signal 301a, but each subarray 702, 704, 706 may use a different antenna sampling frequency depending on its number of antenna elements. Within each subarray 702, 704, 706, antenna elements sample the OFFM signal 301a sequentially, necessitating the use of the RF switch 620, 620a, 620b. For example, the number of subarrays 702, 704, 706 of the antenna array 500 may be P and each subarray may have $M^{(p)}$ number of antenna elements, p = 1,2, ... , P. The antenna sampling interval of a subarray p may be defined as:

$$T_a^{(p)} = 2M^{(p)}T_r, \ p = 1, 2, ..., P \tag{1}$$

where $T_r$ is the slot duration defined by the indoor localization system 300. As a result, the sampling frequency of the subarray p may be defined as:

$$f_a^{(p)} = f_r/(2M^{(p)}), \tag{2}$$

where $f_r = 1/T_r$ is a slot rate. That is, antenna elements from different subarrays have different sampling frequencies since subarrays may have different number of antenna elements. For example, $M^{(1)} = 4$, $M^{(2)} = 3$ and $M^{(3)} = 2$ for subarrays 702, 704 and 706 respectively.

The DOA estimation technique described in this application (i.e. a phase compensated DOA estimation) utilizes the frequency response of the antenna array to estimate the DOA as will be described later in this application. Per the Nyquist-Shannon theorem, to compute the frequency response of the antenna array, the antenna sampling frequency should be at least twice the baseband signal bandwidth to prevent aliasing. However, for OFDM signals, only active subcarriers carry information. Therefore, the antenna sampling frequency of all subarrays should be at least twice the active subcarrier bandwidth:

$$f_a^{(min)} \geq 2\left(\frac{L_a \Delta f}{2}\right) \Rightarrow \frac{f_r}{2M_{max}} \geq L_a \Delta f \Rightarrow f_r \geq 2M_{max}L_a\Delta f, \tag{3}$$

where $L_a$ is the number of active subcarriers, $\Delta f$ is the OFDM subcarrier spacing, $M_{max} = max\{M^{(1)}, M^{(2)}, ... , M^{(P)}\}$, and $f_a^{(min)}$ is the lowest antenna sampling frequency, that is, $f_a^{(min)} = min\{f_a^{(1)} f_a^{(2)} ... f_a^{(P)}\}$ which corresponds to the subarray with the highest number of antenna elements. If $f_a^{(min)}$ satisfy the Nyquist-Shannon theorem therefore all antenna sampling frequencies also do.

Therefore, the slot rate may be at least $2M_{max}$ times the bandwidth of the active subcarriers. Thus, the slot rate may be set, by the indoor localization system 300, as $f_r = 2M_{max}f_s$ ensuring it exceeds the minimum requirement since

$$f_r \geq 2M_{max}L\Delta f = 2M_{max}f_s > 2M_{max}L_a\Delta f, \tag{4}$$

where $L$ is the number of subcarriers and $f_s$ is the OFDM sampling frequency. Reduction of the slot rate is possible as long as an active subcarrier count reduces proportionally.

However, increasing the antenna sampling frequency raises both the energy requirements for powering electronic devices and costs due to the need for higher Analog-to-digital Converter (ADC) sampling rates. To mitigate these issues, the OFDM may be transmitted with fewer active subcarriers, allowing a reduction in the sampling frequency without introducing aliasing. By halving or quartering the number of active subcarriers, the sampling frequency may be reduced balancing energy consumption and cost-efficiency against the potential impact on DOA estimation accuracy due to fewer samples per DOA estimation OFDM symbol 640.

As discussed above, the anchor device 302a receives via the antenna array 500 the OFDM signal 301a transmitted by the tag device 304a being localized and the at least one RF switch 620 samples the received OFDM signal 301a sequentially from the antenna elements of the antenna array 500 in a time-division manner according to the predetermined switching pattern 700. The down converter 614 of each RF front end 610 then down converts the sampled OFDM signal 301a, which the ADC 618 of each RF front end 610 subsequently samples into a discrete format, as for example per the following equation:

$$s_m[n] = \{s_m(nT_a)\}_{n=0}^{N-1}, \qquad (5)$$

where m = 1, 2, ..., M identifies each antenna element, N denotes the total number of samples, and $s_m[n]$ is the down-converted sampled OFDM signal. Note that, since each antenna element belongs to a subarray, then N should be equal to $N^{(p)}$, p = 1, 2, ..., P. The term $N^{(p)}$ denotes the number of samples per antenna element in the subarray p. The received OFDM signal 301a may further be processed by each RF front end 610 and/or by the controller 630. The further processing may for example comprise, but is not limited to, guard interval removal, serial to parallel conversion, etc.

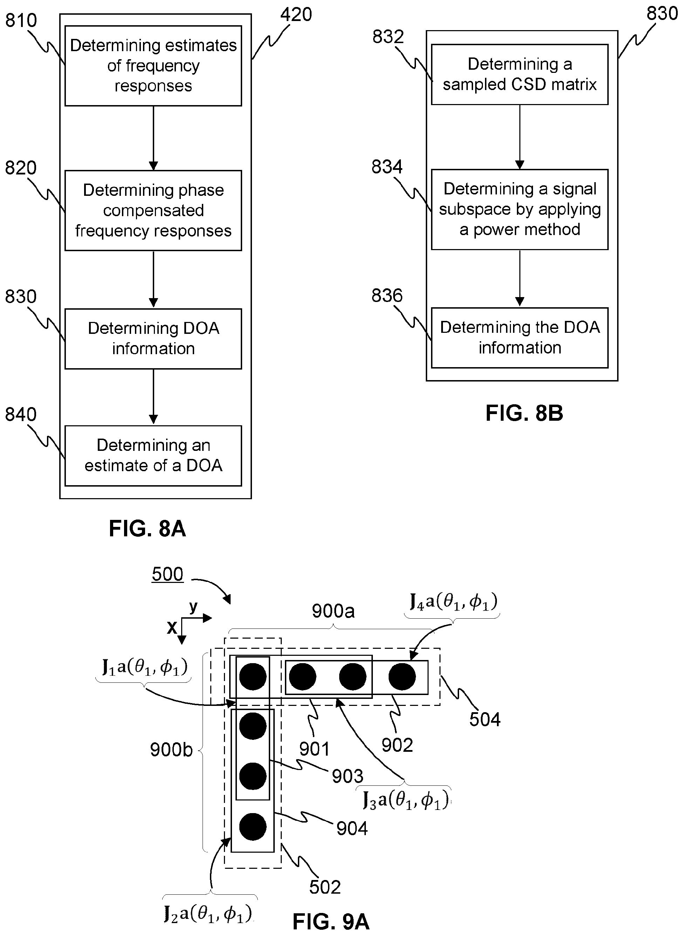

At step 420, the anchor device 302a applies a phase compensated DOA estimation to determine based on the received OFDM signal 301a an estimate of the DOA comprising two angles of arrival and to compensate a phase shift caused by the sequential sampling of the ODFM signal 301a. As a general definition, the DOA is a transmitter (e.g. the tag device 304a) direction measured relative to the line perpendicular to the antenna array 500. The dual shift-invariance property of the antenna array 500 allows the estimation of the DOA comprising the two angles of arrival. Thus, only one DOA is estimated, but the estimated DOA comprises two angles of arrival. For example, the two angles of arrival may comprise two of the following: an azimuth angle, an elevation angle, a zenith angle, or any other angle. The azimuth angle, the elevation angle and the zenith angle are only special cases of the angle of arrival depending on the orientation of the antenna array 500 in 3D space. From now on in this patent application the azimuth angle $\theta$ and the elevation angle $\phi$ are used as the two angles of arrival of the DOA to be estimated. However, the azimuth angle and the elevation angle are only non-limiting examples, and also any other two angles of arrival may be used. The phase compensated DOA estimation is enabled by the dual shift-invariant characteristic of the antenna array 500. In other words, the dual shift-invariant characteristic of the antenna array 500 enables the phased compensated DOA estimation for determining based on the received signal 301a the estimate of the DOA and for compensating the phase shift caused by the sequential sampling of the received ODFM signal 301a. An example of the applying the phase compensated DOA estimation is described next by referring to Figure 8A that illustrates an example flow chart of applying the phase compensated DOA estimation by the anchor device 302a at step 420.

As discussed above, the phase compensated DOA estimation utilizes the frequency response of the antenna array 500 to estimate the DOA. At step 810, the anchor device 302a may determine an estimate of the frequency response of each antenna element of the antenna array 500 based on the samples of the received OFDM signal 301a from each antenna element by applying Discrete Fourier Transform (DFT). The DFT may be implemented in software or directly in hardware. The estimates of the antenna frequency response (i.e. samples) of each antenna element may be determined by applying the DFT according to:

$$S_m[k] = \mathrm{DFT}_k\{s_m[n]\}, \qquad (6)$$

where $S_m[k]$ indicates the amplitude and phase of the signal at the k-th frequency component of the m-th antenna residing in the subarray p. The frequency for the k-th component, after centering a zero-frequency component in the spectrum, may be defined by:

$$f_k^{(p)} = \begin{cases} \dfrac{kf_r}{2M^{(p)}N^{(p)}}, & \text{for } k = 0, 1, \ldots, \dfrac{N^{(p)}}{2} - 1 \\ -\dfrac{(N-k)f_r}{2M^{(p)}N^{(p)}}, & \text{for } k = \dfrac{N^{(p)}}{2}, \ldots, N^{(p)} - 1 \end{cases}. \qquad (7)$$

where $f_k^{(p)}$ is the k-th frequency component of the DFT spectrum corresponding to an antenna in the subarray p.

At step 820, the anchor device 302a may determine phase compensated frequency responses of the antenna elements based on the estimates of frequency responses of the antenna elements by applying a phase compensation. A traditional ESPRIT, which is a subspace-based DOA estimation method, efficiently estimates the DOA by utilizing the dual shift-invariant property of antenna arrays. Contrasting with DOA estimation methods like MUSIC, which require laborious peak searching, ESPRIT streamlines this process, eliminating such steps. The DOA estimation method described in this application also compensates for modeling errors to a degree, reducing the need for comprehensive array calibration. Particularly, uniform antenna arrays (e.g. uniform L-shaped antenna array) facilitate ESPRIT's estimation of two angles of arrival (e.g. the azimuth and elevation angles) by separately using the x-axis and y-axis parts of the antenna arrays (e.g. the X-axis array part 502 and the Y-axis array part 504). The determination of the phase compensated frequency responses of the antenna elements based on the estimates of frequency responses of the antenna elements by applying a phase compensation may comprise applying the phase compensation separately for antenna elements sampled inside each DOA estimation OFDM symbol 640, which may then be summed up to form the phase compensated frequency responses of the antenna elements as follows:

$$\tilde{S} = \underbrace{S_1 \odot K_1}_{\substack{\text{phase compensated}\\\text{samples of 1st OFDM symbol}}} + \underbrace{S_2 \odot K_2}_{\substack{\text{phase compensated}\\\text{samples of 2nd OFDM symbol}}} + \cdots + \underbrace{S_L \odot K_L}_{\substack{\text{phase compensated}\\\text{sampels of L-th OFDM symbol}}} \quad .(8)$$

where $S_l$ is the array sample matrix. The array sample matrix is composed of estimated array frequency responses of the l-th DOA estimation OFDM symbol, and l = 1, 2, ..., L. These array frequency responses (i.e samples) comprise all subarrays of the antenna array 500. The term $K_l$ represents the phase correction matrix of l-th OFDM symbol to correct the phase shift caused by the sequential sampling and $\odot$ is the Hadamard product. More specifically, matrices $S_l$ and $K_l$ are defined as follows:

$$S_l^T \triangleq \begin{bmatrix} S_l^{(1)} & S_l^{(2)} & \cdots & S_l^{(P)} \end{bmatrix}, \tag{9}$$

$$K_l^T \triangleq \begin{bmatrix} K_l^{(1)} & K_l^{(2)} & \cdots & K_l^{(P)} \end{bmatrix}, \tag{10}$$

where the p-subarray sample matrix $S_l^{(p)}$ and the p-subarray phase correction matrix $K_l^{(p)}$ are both matrices of size $M^{(p)} \times N_{min}$ in which $N_{min} \triangleq \min\{N^{(1)}, N^{(2)}, ..., N^{(P)}\}$. The sample matrix $S_l^{(p)}$ is a sample matrix of the subarray p and is organized as follows:

$$S_l^{(p)} \triangleq \begin{bmatrix} S_l^{(p)}[0] & S_l^{(p)}[1] & \cdots & S_l^{(p)}[N_{min}-1] \end{bmatrix}, \tag{11}$$

$$S_l^{(p)}[k]^T \triangleq \begin{bmatrix} S_1[k] & S_2[k] & \cdots & S_M[k] \end{bmatrix}, \tag{12}$$

that is, each row of $S_l^{(p)}$ corresponds to samples of a single antenna element of the subarray p. The matrix $K_l^{(p)}$ represents the phase shift correction of the subarray p and is defined as follow:

$$K_l^{(P)} \triangleq \begin{bmatrix} \bar{\kappa}_{1,f_0^{(p)}} & \bar{\kappa}_{1,f_1^{(p)}} & \cdots & \bar{\kappa}_{1,f_{N_{min}-1}^{(p)}} \\ \bar{\kappa}_{2,f_0^{(p)}} & \bar{\kappa}_{2,f_1^{(p)}} & \cdots & \bar{\kappa}_{2,f_{N_{min}-1}^{(p)}} \\ \vdots & \vdots & \ddots & \vdots \\ \bar{\kappa}_{M,f_0^{(p)}} & \bar{\kappa}_{M,f_1^{(p)}} & \cdots & \bar{\kappa}_{M,f_{N_{min}-1}^{(p)}} \end{bmatrix}, \tag{13}$$

where $\bar{\kappa}_{m,f_k^{(p)}}$ is the inverse of $\kappa_{m,f_k^{(p)}}$, which represents the phase shift of the k-th antenna element of subarray p resulting from the sequential sampling.

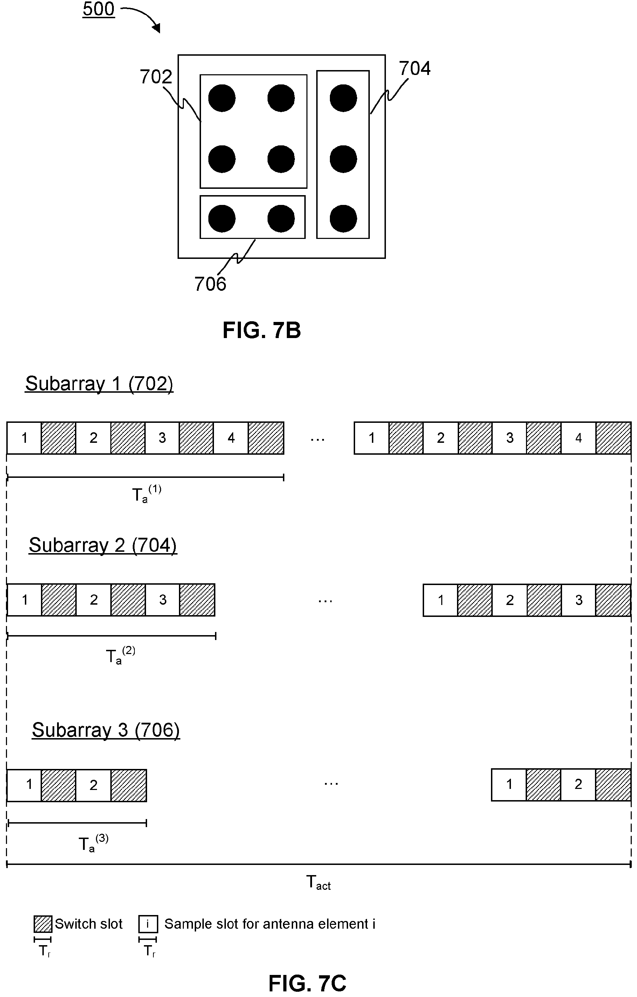

Figure 7B illustrates an example of a rectangular antenna array 500 comprising 9 antenna elements. The antenna elements of the example antenna array 500 are illustrated with black circles in Figure 7B. The rectangular antenna array 500 of Figure 7B comprises three non-overlapping subarrays 702, 704, 706 (e.g. a first subarray 702, a second subarray 704, and a third subarray 706). This means that, in the case of the example of Figure 7B, the radio communicator part 600 comprises three RF front ends 610, 610a, 610b and RF switches 620, 620a, 620b, one for each subarray 702, 704, 706.

In this example, the array of antenna samples a single DOA estimation OFDM symbol. The sampling frequency of the OFDM signal ($f_s$) is 1.728 MHz. The duration of active subcarriers ($T_{act}$) is 32.407 $\mu$s. However, these are only non-limiting examples for the OFDM sampling frequency and for the duration of active subcarriers.

In the antenna array 500 according to the example of Figure 7B $M_{max} = max\ \{M^{(1)}, M^{(2)}\ M^{(3)}\} = \{4, 3, 2\} = 4$. Therefore, the indoor localization system sets the slot rate as $f_r = 2M_{max}f_s = 2 \times 4 \times 1.728$ MHz = 13.824 MHz. Figure 7C illustrates the DOA estimation OFDM symbol sampling process for the example antenna array 500 of Figure 7B. In the example of Figure 7C, the switching patterns are Round Robin switching patterns. Each subarray 702, 704, 706 samples the received OFDM signal 301a simultaneously. Since each subarray 702, 704, 706 may have distinct number of antenna elements, the Round-Robin sequence is different for each subarray 702, 704, 706 as can be seen in Figure 7C.

The antenna sampling frequency of the first subarray 702 defined by using the equation (2) above is $f_a^{(1)} = f_r/(2M^{(2)}) = 13.824\ MHz/(2 \times 4) = 1.728$ MHz. The antenna sampling frequency of the second subarray 704 defined by using the equation (2) above is $f_a^{(2)} = f_r/(2M^{(2)}) = 13.824\ MHz/(2 \times 3) = 2.304$ MHz. The antenna sampling frequency of the third subarray 706 defined by using the equation (2) above is $f_a^{(3)} = f_r/(2M^{(3)}) = 13.824\ MHz/(2 \times 2) = 3.465$ MHz. Since the antenna sampling frequency of each subarray 702, 704, 706 is different, the number of samples per antennas differ from subarrays 702, 704, 706.

The number of samples per antennas from the first subarray 702 is $N^{(1)} =$

$$\left\lfloor T_{act}f_a^{(1)} \right\rfloor = \lfloor 32.407\mu s \times 1.728\ MHz \rfloor = 55$$

samples/antenna element. The number of samples per antennas from the second subarray 704 is $N^{(2)} = $ $\left\lfloor T_{act}f_a^{(2)} \right\rfloor = \lfloor 32.407\mu s \times 1.728\ MHz \rfloor = 65$ samples/an-

tenna element. The number of samples per antennas from the third subarray 706 is $N^{(3)} =$

$$\left\lfloor T_{act}f_a^{(3)} \right\rfloor = \lfloor 32.407\mu s \times 3.465 MHz \rfloor = 112$$

samples/antenna element. Therefore, $N_{min} = min\{N^{(1)},$

$N^{(2)}, N^{(3)}\} = \{55, 65, 112\} = 55$. The sample matrix for the first subarray 702 is $\boldsymbol{S}_1^{(1)} \in \mathbb{C}^{4 \times 55}$, the sample matrix for the second subarray 704 is $\boldsymbol{S}_1^{(2)} \in \mathbb{C}^{3 \times 55}$, and the sample matrix for the third subarray 706 $\boldsymbol{S}_1^{(3)} \in \mathbb{C}^{2 \times 55}$

Therefore, the array sample matrix is $\boldsymbol{S}_1^T \triangleq \begin{bmatrix} \boldsymbol{S}_1^{(1)} & \boldsymbol{S}_1^{(2)} & \boldsymbol{S}_1^{(3)} \end{bmatrix} \in \mathbb{C}^{9 \times 55}$ where $\mathbb{C}$ denotes the set of complex numbers.

At step 830, the anchor device 302a may determine DOA information based on the phase compensated frequency responses. An example of the determining the DOA information based on the phase compensated frequency responses is described next by referring to Figure 8B that illustrates an example flow chart of determining the DOA information by the anchor device 302a at step 830.

At step 832, the anchor device 302a may determine a sampled cross-spectral density (CSD) matrix representing phase compensated frequency responses of the dominant signal component of the OFDM signal 301a based on the phase compensated frequency responses of the antenna elements. The dominant signal component of the OFDM signal 301a represents a signal component with the highest power. The signal component with the highest power is typically the LOS component. Thus, at step 832 the phase compensated frequency responses of the dominant signal component, i.e. the CSD matrix may be determined. The CSD matrix may for example be defined as:

$$\mathbf{C}_{\tilde{S}\tilde{S}} \triangleq \left(\frac{1}{N}\right) \tilde{S}\tilde{S}^H, \tag{14}$$

At step 834, the anchor device 302a may determine an element ($u_s$) of a signal subspace ($\mathcal{H}_s$) as the dominant eigenvector of the CSD matrix by applying a power method. For example, in an example case, where a single tag device 304a transmits the OFDM signal 301 to the anchor device 302a, the signal subspace represents a set ($V_s$) of an array response of the LOS component, and may be expressed as:

$$\mathcal{H}_s = \mathcal{V}_s = \text{span}\{a(\theta_1, \phi_1)\}. \tag{15}$$

where $a(\theta_1, \phi_1)$ is the array response of the LOS component, where the subscript value one relates to the LOS component. The subscript values higher than one would relate to non-LOS components. The array response of the dominant signal component (e.g. the LOS component) of the antenna array 500 being uniform and having the dual-shift invariant characteristics may for example be defined as follows:

$$\mathbf{a}(\theta_i, \phi_i) \triangleq \begin{bmatrix} 1 \\ e^{-j\eta_2} \\ e^{-j\eta_3} \\ \vdots \\ e^{-j\eta_{M-1}} \end{bmatrix} \in \mathbb{C}^{M \times 1} \qquad (16)$$

in which

$$\eta_j = \frac{2\pi}{\lambda} \begin{bmatrix} sin(\theta_1)\, cos(\phi_1) \\ sin(\theta_1)\, sin(\phi_1) \\ cos(\theta_1) \end{bmatrix}^T \begin{bmatrix} d_x^j \\ d_y^j \\ d_z^j \end{bmatrix} \qquad (17)$$

where ( $d_x^j$   $d_y^j$   $d_z^j$ ) is the Cartesian coordinate system of the antenna element j relative to the reference antenna element, and $\lambda$ is the carrier wavelength. The number one in the vector of equation (16) denotes a reference antenna, which in this case is the first antenna element, but the reference antenna element may also be any other antenna element. The array response may be defined by using the above equations (16) and (17) for any antenna configuration as long as the antenna array 500 is uniform and has a dual shift-invariant characteristic.

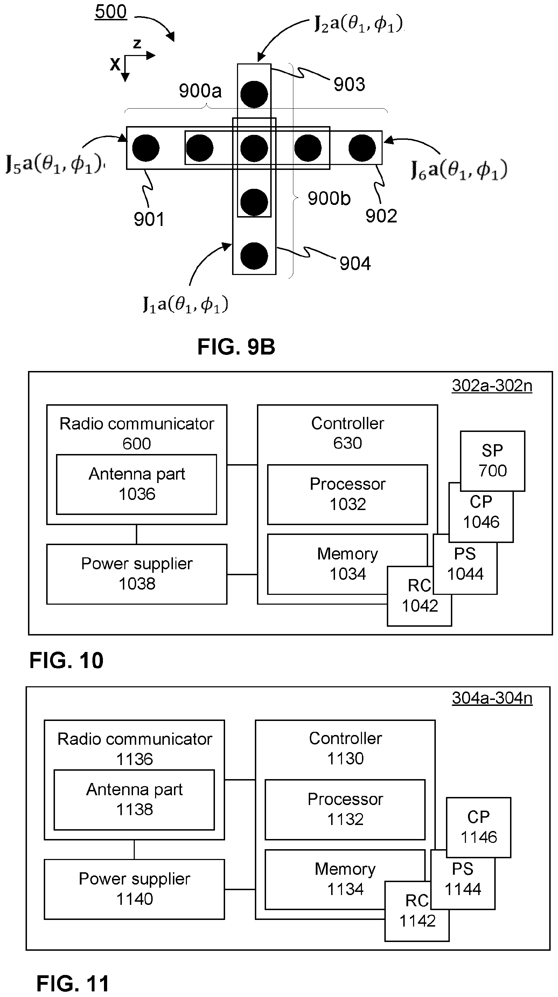

To determine the DOA information comprising two angels of arrival, the antenna array 500 may be divided (e.g. segmented) into at least two virtual subarray pairs 900a, 900b. Each virtual subarray pair 900a, 900b comprises at least two virtual subarrays 901-904. Thus the at least two virtual subarray pairs 900a, 900b comprise together at least four virtual subarrays 901-904. Each virtual subarray 901-904 overlaps partly with at least one other virtual subarray 901-904. The virtual subarrays 901-904 are mathematical concepts based on the dual shift-invariant characteristics of the antenna array 500, which enable the determination of the DOA information. It should be noted that the virtual subarrays 901-904 are different than the subarrays 702, 704, 706 (i.e. so called physical subarrays) discussed above. The dividing of the antenna array 500 into the at least two virtual subarray pairs 900a, 900b, wherein each virtual subarray part 900a, 900b comprises at least two virtual subarrays 901-904, depends on the antenna configuration. Figure 9A illustrates schematically a non-limiting example of an L-shaped antenna array 500 in xy-plane comprising seven antenna elements divided into the two virtual subarray pairs 900a, 900b each comprising two virtual subarrays 901-904 so that the virtual subarray pair 900a comprises two virtual subarrays 901, 902 and the virtual subarray pair 900b comprises two virtual subarrays 903, 904. In the example of Figure 9A, the example L-shaped antenna array 500 is divided into the four virtual subarrays 901-904 so that the X-axis part 502 of the antenna array 500 is divided into two virtual subarrays 903, 904 and the Y-axis part 504 of the antenna array 500 is divided into two virtual subarrays 901, 902. Figure 9B illustrates schematically a non-limiting example of a cross shaped antenna array 500 in xz-plane comprising eight antenna elements divided into the two virtual subarray pairs 900a, 900b each comprising two virtual subarrays 901-904 so that the virtual subarray pair 900a comprises two virtual subarrays 901, 902 and the virtual subarray pair 900b comprises two virtual subarrays 903, 904. The antenna elements of the example antenna array 500 are illustrated with black circles in Figures 9A and 9B.

The at least two virtual subarray pairs 900a, 900b comprising together at least four virtual subarrays 901-904 so that each subarray comprises at least two virtual subarray 901-903 enable a formulation of a dual shift-invariant characteristic, from which the DOA information comprising two angles of arrival may be determined as will be described later in this application. Two virtual subarray pairs 900a, 900b comprising together four virtual subarrays 901-904 so that each virtual subarray comprises two virtual subarrays 901-904 are enough to formulate the dual shift-invariant characteristic. Thus, preferably the antenna array 500 is divided into two virtual subarray pairs 900a, 900b, wherein each virtual subarray pair 900a, 900b comprises two virtual subarrays 901-904. However, the antenna array 500 may also be divided into more than two virtual subarray pairs 900a, 900b, wherein each virtual subarray pair 900a, 900b comprises two or more virtual subarrays 901-904. The uniform antenna array 500 possesses a dual shift-invariant characteristic either in xy-plane or in xz-plane or in yz-plane. That means the antenna array 500 has two virtual subarray pairs 900a, 900b satisfying one of the following conditions:

xy-plane:

$$\begin{aligned} \mathbf{J}_1 \mathbf{a}(\theta_1, \phi_1) e^{-jv_1} &= \mathbf{J}_2 \mathbf{a}(\theta_1, \phi_1), \\ \mathbf{J}_3 \mathbf{a}(\theta_1, \phi_1) e^{-j\mu_1} &= \mathbf{J}_4 \mathbf{a}(\theta_1, \phi_1) \end{aligned} \qquad (18)$$

xz-plane:

$$
\begin{aligned}
\mathbf{J}_1\mathbf{a}(\theta_1,\phi_1)e^{-jv_1} &= \mathbf{J}_2\mathbf{a}(\theta_1,\phi_1), \\
\mathbf{J}_5\mathbf{a}(\theta_1,\phi_1)e^{-j\iota_1} &= \mathbf{J}_6\mathbf{a}(\theta_1,\phi_1)
\end{aligned}
\tag{19}
$$

yz-plane:

$$
\begin{aligned}
\mathbf{J}_3\mathbf{a}(\theta_1,\phi_1)e^{-j\mu_1} &= \mathbf{J}_4\mathbf{a}(\theta_1,\phi_1), \\
\mathbf{J}_5\mathbf{a}(\theta_1,\phi_1)e^{-j\iota_1} &= \mathbf{J}_6\mathbf{a}(\theta_1,\phi_1)
\end{aligned}
\tag{20}
$$

in which

$$
v_1 = \frac{2\pi\Delta_x}{\lambda}\sin(\theta_1)\cos(\phi_1),
\tag{21}
$$

$$
\mu_1 = \frac{2\pi\Delta_y}{\lambda}\sin(\theta_1)\sin(\phi_1),
\tag{22}
$$

$$
\iota_1 = \frac{2\pi\Delta_z}{\lambda}\cos(\theta_1),
\tag{23}
$$

where $\Delta_x$, $\Delta_y$, $\Delta_z$ is the distance between two consecutive antennas in x-axis, y-axis and z-axis, respectively.

The matrices $\mathbf{J}_1$, $\mathbf{J}_2$, $\mathbf{J}_3$, $\mathbf{J}_4$, $\mathbf{J}_5$, and $\mathbf{J}_6$ depend on the antenna configuration. For example, in the example of Figure 9A, which illustrates the example L-shape antenna array in xy-plane, the subarray 903 response of the LOS signal may correspond to $\mathbf{J}_1\mathbf{a}(\theta_1,\phi_1)$, the subarray 904 response of the LOS signal may correspond to $\mathbf{J}_2\mathbf{a}(\theta_1,\phi_1)$, the subarray 901 response of the LOS signal may correspond to $\mathbf{J}_3\mathbf{a}(\theta_1,\phi_1)$, and the subarray 902 response of the LOS signal may correspond to $\mathbf{J}_4\mathbf{a}(\theta_1,\phi_1)$. For example, in the example of Figure 9B, which illustrates the example cross shaped antenna array in xz-plane, the subarray 904 response of the LOS signal may correspond to $\mathbf{J}_1\mathbf{a}(\theta_1,\phi_1)$, the subarray 903 response of the LOS signal may correspond to $\mathbf{J}_2\mathbf{a}(\theta_1,\phi_1)$, the subarray 901 response of the LOS signal may correspond to $\mathbf{J}_5\mathbf{a}(\theta_1,\phi_1)$, and the subarray 902 response of the LOS signal may correspond to $\mathbf{J}_6\mathbf{a}(\theta_1,\phi_1)$. Equations for the matrices $\mathbf{J}_1$, $\mathbf{J}_2$, $\mathbf{J}_3$, $\mathbf{J}_4$, $\mathbf{J}_5$, and $\mathbf{J}_6$ may be defined for any antenna configuration (as long as the antenna array 500 is uniform and has a dual shift-invariant characteristics).

As described above, the element of the signal subspace may be estimated from the sampled CSD matrix. The element ($\mathbf{u}_s$) of the signal subspace may be expressed as follows:

$$
\mathbf{u}_s \approx \rho_1\mathbf{a}(\theta_1,\phi_1),\rho_1 \in \mathbb{R}_{\neq 0},
\tag{24}
$$

where $\rho_1$ is a linear coefficient or an amplitude of the LOS component.

The sampled CSD matrix is a Hermitian and positive semidefinite matrix. Therefore, the power method may be applied on the sampled CSD matrix to estimate the dominant eigenvector. The dominant eigenvector is the signal subspace. Applying the power method to estimate the dominant eigenvector significantly reduces execution time and memory usage by avoiding the extensive computations involved in the eigenvalue decomposition used by the traditional ESPRIT. The power method iteratively computes the recurrence relation:

$$
\mathbf{v}_{k+1} = \frac{\mathbf{C}_{\tilde{s}\tilde{s}}\mathbf{v}_k}{\|\mathbf{C}_{\tilde{s}\tilde{s}}\mathbf{v}_k\|}, k \geq 1
\tag{25}
$$

in which $\mathbf{v}_1 = 1_M$. The iteration concludes when $\|\mathbf{v}_{k+1} - \mathbf{v}_k\|^2 < \alpha$, where $\alpha \in \mathbb{R}$ and $0 < \alpha \ll 1$, indicating

$$
\mathbf{v}_{k+1} \approx \underbrace{\rho_1\mathbf{a}(\theta_1,\phi_1)}_{\mathbf{u}_s} \in \mathcal{H}_s.
\tag{26}
$$

Failure to meet this stopping criterion within a predetermined number of iterations may indicate that the estimation of the DOA information has not succeeded. The predetermined number may for example be, but is not limited to, 30.

At step 836, the anchor device 302a may determine the DOA information based on the signal subspace by applying total least squares (TLS). The estimated DOA comprises two angles of arrival: azimuth and elevation. The DOA information comprises the following elements: a first element of the DOA information $e^{-jv1}$, a second element of the DOA information $e^{-j\mu1}$, and a third element of the DOA information $e^{-j_{\iota}1}$. The systems of equations (18)-(20) may be transformed into:

for xy-plane:

$$\mathbf{J}_1\mathbf{u}_s e^{-jv_1} \approx \mathbf{J}_2\mathbf{u}_s,$$
$$\mathbf{J}_3\mathbf{u}_s e^{-j\mu_1} \approx \mathbf{J}_4\mathbf{u}_s. \qquad (27)$$

for xz-plane:

$$\mathbf{J}_1\mathbf{u}_s e^{-jv_1} \approx \mathbf{J}_2\mathbf{u}_s,$$
$$\mathbf{J}_5\mathbf{u}_s e^{-j_{\iota}1} \approx \mathbf{J}_6\mathbf{u}_s. \qquad (28)$$

for yz-plane:

$$\mathbf{J}_3\mathbf{u}_s e^{-j\mu_1} \approx \mathbf{J}_4\mathbf{u}_s,$$
$$\mathbf{J}_5\mathbf{u}_s e^{-j_{\iota}1} \approx \mathbf{J}_6\mathbf{u}_s. \qquad (29)$$

The systems in the equation (27)-(29) are overdetermined, which is vulnerable to inaccuracies from signal subspace estimation and the imperfections in array response. To mitigate these, the TLS is applied to estimate the first element of the DOA information $e^{-jv1}$ the second element of the DOA information $e^{-j\mu1}$, and to the third element of the DOA information $e^{-j_{\iota}1}$. Instead of relying numerical method, the dual shift-invariant equations in (27)-(29) are solved analytically via the TLS an improvement made possible by estimating only one DOA. The dual shift-invariant equations may be solved in two parts. According to an example, the first element of the DOA information $e^{-jv1}$ may be solved by using the equations (30)-(34) by utilizing $\mathbf{J}_1$ and $\mathbf{J}_2$, the second element of the DOA information $e^{-j\mu1}$ may be solved by using the same equations (30)-(34) by utilizing $\mathbf{J}_3$ and $\mathbf{J}_4$ (i.e. $\mathbf{J}_1$ is replaced with $\mathbf{J}_3$ and $\mathbf{J}_2$ is replaced with $\mathbf{J}_4$ in the equation (30) and $e^{-jv1}$ is replaced with $e^{-j\mu1}$ in the equation (31)), and the third element of the DOA information $e^{-j_{\iota}1}$ may be solved by using the same equations (30)-(34) by utilizing $\mathbf{J}_5$ and $\mathbf{J}_6$ (i.e. $\mathbf{J}_1$ is replaced with $\mathbf{J}_5$ and $\mathbf{J}_2$ is replaced with $\mathbf{J}_6$ in the equation (30) and $e^{-jv1}$ is replaced with $e^{-j_{\iota}1}$ in the equation (31)). The equations (30)-(34) present one example for solving the dual shift-invariant equations (27)-(29) analytically via the TLS and the dual shift-invariant equations (27)-(29) may also be solved analytically via the TLS by using any other suitable equations. A matrix $\mathbf{E}$ is defined by using the following equation:

$$\mathbf{E} \triangleq \begin{bmatrix} (\mathbf{J}_1\mathbf{u}_s)^H \\ (\mathbf{J}_2\mathbf{u}_s)^H \end{bmatrix} \begin{bmatrix} \mathbf{J}_1\mathbf{u}_s & \mathbf{J}_2\mathbf{u}_s \end{bmatrix} + \epsilon\mathbf{I}_2, \qquad (30)$$

with $_\varepsilon\mathbf{I}_2$ ($0 < \varepsilon \ll 1$) to guarantee the positive definiteness of $\mathbf{E}$.

Given that $\mathbf{E} \in \mathbb{C}^{2\times2}$ is Hermitian, it is diagonalizable and its eigenvalues are real according to the finite-dimensional spectral theorem. Therefore, it is possible to apply TLS on E. The eigenvalues of $\mathbf{E}$ may be denoted as $\Sigma_1$ and $\Sigma_2$, where $\Sigma_1 \geq \Sigma_2$. The smallest eigenvalue and its corresponding eigenvector may be analytically solved as follows:

$$e^{-j\hat{v}_1} = \frac{v_1}{v_2} \qquad (31)$$

such that

$$\underbrace{\begin{bmatrix} e_{11} & e_{12} \\ e_{21} & e_{22} \end{bmatrix}}_{E} \begin{bmatrix} v_1 \\ v_2 \end{bmatrix} = \hat{\Sigma}_2 \begin{bmatrix} v_1 \\ v_2 \end{bmatrix}, \qquad (32)$$

$$\hat{\Sigma}_2 = \min \left\{ \frac{b \pm \sqrt{b^2 - 4ac}}{2} \right\}, \qquad (33)$$

in which $a \triangleq 1$, $b \triangleq -(e_{11} - e_{22})$, and $c \triangleq e_{11}e_{22} - e_{12}e_{21}$. However, since E is a positive-definite matrix, then its determinant is positive (c > 0), therefore

$$\hat{\Sigma}_2 = \frac{-b - \sqrt{b^2 - 4ac}}{2}. \qquad (34)$$

At step 840, the anchor device 302a may determine the estimate of the DOA based on the determined DOA information. As discussed above the estimate of the DOA comprises two angles of arrival, e.g. the azimuth angle and the elevation angle. The estimate of the DOA may for example (but is not limited to) be defined by using the following equations (where $\hat{\theta}_1$ is the estimated azimuth angle and $\hat{\phi}_1$ is the estimated elevation angle):

for xy-plane:

$$\begin{aligned} \hat{\theta}_1 &= \arctan2(\varphi_1), \\ \hat{\phi}_1 &= \arccos(\|\varphi_1\|). \end{aligned} \qquad (35)$$

such that

$$\varphi_1 = -\left( \frac{\arctan2\left(e^{-j\hat{v}_1}\right)}{\left(\frac{2\pi\Delta_x}{\lambda}\right)} + j\frac{\arctan2\left(e^{-j\hat{\mu}_1}\right)}{\left(\frac{2\pi\Delta_y}{\lambda}\right)} \right), \qquad (36)$$

for xz-plane:

$$\begin{aligned} \hat{\theta}_1 &= arccos(\varphi_2), \\ \hat{\phi}_1 &= \arccos\left( \frac{\varphi_1}{sin(\hat{\theta}_1)} \right). \end{aligned} \qquad (37)$$

such that

$$\varphi_1 = \frac{\arctan2\left(e^{-j\hat{v}_1}\right)}{\left(\frac{2\pi\Delta_x}{\lambda}\right)},$$

$$\varphi_2 = \frac{\arctan2\left(e^{-j\hat{\imath}_1}\right)}{\left(\frac{2\pi\Delta_z}{\lambda}\right)}, \qquad (38)$$

for yz-plane:

$$\hat{\theta}_1 = arccos(\varphi_2),$$

$$\hat{\phi}_1 = arcsin\left(\frac{\varphi_1}{sin(\hat{\theta}_1)}\right). \qquad (39)$$

such that

$$\varphi_1 = \frac{arctan2\left(e^{-j\hat{\mu}_1}\right)}{\left(\frac{2\pi\Delta_y}{\lambda}\right)},$$

$$\varphi_2 = \frac{arctan2\left(e^{-j\hat{\iota}_1}\right)}{\left(\frac{2\pi\Delta_z}{\lambda}\right)} \qquad (40)$$

where arctan2($\cdot$) is the 2-argument tangent.

At step 430, the anchor device 302a may send, e.g. report, the estimated DOA together with DOA metadata to the central entity 306, e.g. the cloud entity, via the wireless communication network 200 for the localization of the tag device 304a. The estimated DOA and the DOA metadata may for example be sent to the central entity 306 in a measurement report comprising the estimated DOA and the DOA metadata. The anchor device 302a may perform the estimation of the DOA described above multiple times (i.e. two or more times) to estimate multiple DOAs (i.e. two or more DOAs). In that case, the measurement report may comprise multiple estimated DOAs. Alternatively, each estimated DOA of the multiple DOAs may be reported in a separate measurement report. In other words, if the anchor device 302a estimates multiple DOAs, one or more estimated DOAs of the multiple estimated DOAs may be included in the same measurement report. The DOA metadata may for example comprise: an identifier of the anchor device 302a sending the estimated DOA, coordinates of the anchor device 302a sending the estimated DOA, an identifier of the tag device 304a being localized, a received signal strength indicator (RSSI) information, and/or time information. The time information may for example be a time of the DOA estimation or a time since the DOA estimation. If the time information comprises the time since the DOA estimation, the anchor device 302a may already set a value greater than zero for the time information in the measurement report, because there may be some time spent between the DOA estimation and sending the DOA estimation to the central entity 306. Alternatively or in addition, each router device 202b of the wireless communication network 200 may then add to the time since the DOA estimation the time they used for forwarding the measurement report. The identifier of the anchor device 302a sending the estimated DOA may limit the location of the tag device being localized already substantially, if the indoor localization system 300 has the knowledge in which location each anchor device 302a is. The RSSI information may for example be used for estimating whether the tag device 304a is close or further away from the anchor device 302a. Alternatively or in addition, the RSSI information may be useful, if the DOA estimation fails for some reason. The DOA metadata may relate to at least one estimated DOA. For example, a simplified DOA metadata comprising only the identifier of the tag device 304a being localized may be reported together with multiple DOAs estimated subsequently.

Furthermore, the indoor localization method may further comprise in response to receiving the measurement report comprising the estimated DOA and the DOA metadata from the anchor device 302a, localizing by the central entity 306, e.g. by the cloud entity, the tag device 304a based on the received estimated DOA and DOA metadata. This is illustrated with step 440 in Figure 4. The central entity 306 is able to define a rough estimate of the location of the tag device 304a being localized, if the location of the anchor device 302a (and possibly also the RSSI information) is known. However, by using the estimated DOA defined and received from the anchor device 302a, the accuracy of the defined estimate of the location of the tag device 304a being localized may be improved. The localization of the tag device 304a by the central entity 306a by using the received estimated DOA and DOA metadata may be based on any known localization calculation methods. According to an example localization calculation method, the central entity 306 may localize the tag device 304a by first defining an estimate of a location of the anchor device 302a sending the estimated DOA (with a rough accuracy, e.g. with an accuracy of 100 meters, depending on the used radio communicator), e.g. by using the coordinates of the anchor device 302a, then by using the estimated DOA to determine a direction or a sector of the tag device 304a being localized in relation to the anchor device 302a sending the estimated DOA (e.g. towards a specific point of compass, e.g. towards north west), and finally by using the RSSI information to estimate the distance of the tag device 304a being localize to the anchor device 302a sending the estimated DOA (e.g. less than few meters, e.g. less than 5 meters). Alternatively, multiple anchor devices 302a-302n may be used to triangulate an exact location of the tag device 304a being localized based on the measurement reports send by the multiple anchor devices 302a-302n. The use of the multiple anchor devices 302a-302n (i.e. the measurement reports send by the multiple anchor devices 302a-302b) improves further the accuracy of the defined estimate of the location of the tag device 304a being localized.

Figure 10 illustrates schematically an anchor device 302a-302n that is able to communicate in the network 200 and to perform the relevant features (steps) of the indoor localization method as above has been explained. In other words, the device that is able to operate as the anchor device 302a-302n and to perform the features of the indoor localization method relevant to the anchor device 302a as above has been explained.

The anchor device 302a-302n comprises the controller (i.e. a control part) 630 that controls operations of its parts 1032, 1034, 600, 1036, 1038, so that the anchor device 302a-302n operates as above has been explained. The controller 630 also controls the switching operation of the at least one RF switch 620, 620a, 620b as discussed above.

The controller 630 comprises a processor (i.e. a processor part) 1032 that performs operator-initiated and/or computer program-initiated instructions, and processes data in order to run applications. The processor part 1032 may comprise at least one processor, e.g. one, two, three, four, or more processors.

The controller 630 also comprises the memory (i.e. a memory part) 1034 in order to store and to maintain data. The data may be instructions, computer programs, and data files. The memory 1034 comprises at least one memory, e.g. one, two, three, four, or more memories.

The anchor device 302a-302n also comprises the radio communicator (i.e. a radio communication part, or a data transfer part) 600 and an antenna (i.e. an antenna part) 1036 that the controller 630 uses in order to send command(s), request(s), message(s), signal(s) and/or data to at least one other device in the indoor localization system 300 and/or in the network 200 via the antenna part 1036. The radio communicator 600 also receives command(s), request(s), signal(s) and/or data from at least one other device in the indoor localization system 300 and/or in the network 200 via the antenna part 1036. The radio communicator part 600 comprises at least the at least one RF switch 620, 620a, 620b and the at least one RF front end 610, 610a, 610b as discussed above. The antenna part 1036 comprises at least the antenna array 500 as discussed above. The communication between the radio communicator 600 of the anchor device 302a-302n and other device in the indoor localization system 300 and/or in the network 200 is provided through the antenna part 1036 wirelessly.

The anchor device 302a-302n may further comprise a power supplier (i.e. a power supply part) 1038. The power supplier 1038 comprises components for powering the anchor device 302a-302n, e.g. a battery and a regulator.

The memory 1014 stores at least a radio communication (RC) application 1042 for operating (controlling) the radio communicator 600, and a power supply (PS) application 1044 for operating the power supplier 1040.

The memory 1034 also stores a computer program (CP) (i.e. a computer software, or a computer application) 1046, which uses at least one of parts 600, 1036, 1038 in order to perform at least the operations of the anchor device 302a-302n explained above in context of the previous figures, when it is executed (run) in a computer, e.g. in the anchor device 302a-302n, by means of the controller 630. The memory 1034 also stores the predefined switching pattern (SP) 700 as discussed above.

The computer program 1046 may be stored in a tangible, non-transitory computer-readable storage medium, e.g. a Compact Disc (CD) or Universal Serial Bus (USB) -type storage device.

Figure 11 illustrates schematically a tag device 304a-304n that is able to communicate in the network 200 and to perform the relevant features (steps) of the indoor localization method as above has been explained. In other words, the device that is able to operate as the tag device 304a-304n and to perform the features of the indoor localization method relevant to the tag device 304a as above has been explained.

The tag device 304a-304n comprises the controller (i.e. a control part) 1130 that controls operations of its parts 1132, 1134, 1136, 1138, 1140 so that the tag device 304a-304n operates as above has been explained.

The controller 1130 comprises a processor (i.e. a processor part) 1132 that performs operator-initiated and/or computer program-initiated instructions, and processes data in order to run applications. The processor part 1132 may comprise at least one processor, e.g. one, two, three, four, or more processors.

The controller 1130 also comprises the memory (i.e. a memory part) 1134 in order to store and to maintain data. The data may be instructions, computer programs, and data files. The memory part 1134 comprises at least one memory, e.g. one, two, three, four, or more memories.

The tag device 304a-304n also comprises the radio communicator (i.e. a radio communication part, or a data transfer part) 1136 and an antenna (i.e. an antenna part) 1138 that the controller 1130 uses in order to send command(s), request(s), message(s), signal(s), and/or data to at least one other device in the indoor localization system 300 and/or in the network 200 via the antenna 1138. The radio communicator 1136 also receives command(s), request(s), signal(s), and/or data from at least one other device in the indoor localization system 300 and/or in the network 200 via the antenna 1138. The communication between the radio communicator 1136 of the tag device 304a-304n and other device in the indoor localization system 300 and/or in the network 200 is provided through the antenna 1138 wirelessly.

The tag device 304a-304n may further comprise a power supplier (i.e. a power supply part) 1140. The power supplier 1140 comprises components for powering the tag device 304a-304n, e.g. a battery and a regulator.

The memory 1034 stores at least a radio communication (RC) application 1142 for operating (controlling) the radio communicator 1136, and a power supply (PS) application 1144 for operating the power supplier 1140.

The memory 1034 also stores a computer program (CP) (i.e. a computer software, or a computer application) 1146, which uses at least one of parts 1136, 1138, 1140 in order to perform at least the operations of the tag device 304a-304n explained above in context of the previous figures, when it is executed (run) in a computer, e.g. in the tag device 304a-304n, by means of the controller 1030.

The computer program 1146 may be stored in a tangible, non-transitory computer-readable storage medium, e.g. a Compact Disc (CD) or Universal Serial Bus (USB) -type storage device.

The indoor localization solution described above enables to reduce execution time, energy consumption, and memory footprint.

The specific examples provided in the description given above should not be construed as limiting the applicability and/or the interpretation of the appended claims. Lists and groups of examples provided in the description given above are not exhaustive unless otherwise explicitly stated.

## Claims

1. An anchor device (302a-302n) for indoor localization, the anchor device (302a-302n) comprises:

   an antenna array (500) comprising a plurality of antenna elements,
   a radio communicator part (600) comprising at least one radio frequency (RF) front end (610, 610a, 610b) and an RF switch (620, 620a, 620b) for each RF front end (610, 610a, 610b), and
   a controller (630),

   wherein the anchor device (302a-302n) is configured to:

   receive, by the radio communicator part (600) via the antenna array (500), Orthogonal Frequency Division Multiplexing (OFDM) signal (301a) comprising at least one direction of arrival (DOA) estimation OFDM symbol (640, 640a, 640b) transmitted by a tag device (304a) being localized, wherein the at least one RF switch (620, 620a, 620b) is configured to sample the received OFDM signal (301a) sequentially from the antenna elements of the antenna array (500), and wherein the number of the antenna elements of the antenna array (500) is higher than the number of RF front ends (610, 610a, 610b) of the radio communicator part (600) times the number of the DOA estimation OFDM symbols (640, 640a, 640b) of the ODFM signal (301a); and
   apply, by the controller (630), a phase compensated DOA estimation to determine based on the received OFDM signal (301a) an estimate of the DOA comprising two angles of arrival and to compensate a phase shift caused by the sequential sampling of the received OFDM signal (301a).

2. The anchor device (302a-302n) according to claim 1, wherein the phase compensated DOA estimation comprises that the anchor device (302a-302n) is configured to:

   determine an estimate of a frequency response of each antenna element of the antenna array (500) based on the samples of the received OFDM signal (301a) from each antenna element by applying Discrete Fourier Transform (DFT),
   determine phase compensated frequency responses of the antenna elements based on the estimates of frequency responses by applying a phase compensation,
   determine DOA information based on the phase compensated frequency responses, and
   determine the estimate of the DOA based on the determined DOA information.

3. The anchor device (302a-302n) according to claim 2, wherein the determining the DOA information comprises that the anchor device (302a-302n) is configured to:

   determine a sampled cross-spectral density (CSD) matrix representing phase compensated frequency responses of the dominant component of the OFDM signal (301a) based on the phase compensated frequency responses of the antenna elements,
   determine a signal subspace as the dominant eigenvector of the CSD matrix by applying a power method, and
   determine the DOA information based on the signal subspace by applying total least squares (TLS).

4. The anchor device (302a-302n) according to claim 3, wherein the dominant signal of the received OFDM signal (301a) is a line-of-sight signal.

5. The anchor device (302a-302n) according to any of the preceding claims, wherein the antenna array (500) is uniform and has a dual shift-invariant characteristic.

6. The anchor device (302a-302n) according to any of the preceding claims, wherein the antenna array (500) is an L-shaped antenna array.

7. The anchor device (302a-302n) according to any of the preceding claims, wherein the number of the RF front ends (610, 610a, 610b) of the radio communicator part (600) is one and the number of the DOA estimation OFDM symbols (640, 640a, 640b) of the OFDM signal (301a) is one.

8. The anchor device (302a-302n) according to any of the preceding claims further configured to send the estimated DOA together with DOA metadata to a central entity (306) via a wireless communication network (200) for localizing the tag device (304a) being localized based on the estimated DOA and the DOA metadata.

9. The anchor device (302a-302n) according to claim 8, wherein the DOA metadata comprises: an identifier of the anchor device (302a-302n), coordinates of the anchor device (302a-302n), an identifier of the tag device (304a) being localized, a received signal strength indicator (RSSI) information, and/or time information.

10. The anchor device (302a-302n) according to any of the preceding claims, wherein the antenna array (500) comprises at least one subarray (702, 704, 706) so that the radio communicator part (600) comprises a dedicated RF front end (610, 610a, 610b) and RF switch (620, 620a, 620b) for each subarray (702, 704, 706).

11. The anchor device (302a-302n) according to claim 10, wherein the at least one subarray (702, 704, 706) simultaneously sample the received OFDM signal (301a), and within each subarray (702, 704, 706) the antenna elements sample the OFDM signal (301a) sequentially by using the respective RF switch (620, 620a, 620b).

12. An indoor localization system (300) for a wireless communication network (200), the indoor localization system (300) comprises:

   one or more tag devices (304a-304n),
   a central entity (306), and
   at least one anchor device (302a-302n) according to any of the preceding claims.

13. An indoor localization method for the anchor device (302a-302n) according to any of claims 1 to 11, the method comprising:

   receiving (410), by a radio communicator part (600) of the anchor device (302a-302n) via an antenna array (500) comprising a plurality of antenna elements, Orthogonal Frequency Division Multiplexing (OFDM) signal (301a) comprising at least one direction of arrival (DOA) estimation OFDM symbol (640, 640a, 640b) transmitted by a tag device (304a) being localized, wherein at least one RF switch (620, 620a, 620b) of the radio communicator part (600) samples the received OFDM signal (301a) sequentially from the antenna elements of the antenna array (500), and wherein the number of the antenna elements of the antenna array (500) is higher than the number of RF front ends (610, 610a, 610b) of the radio communicator part (600) times the number of the DOA estimation OFDM symbols (640, 640a, 640b) of the ODFM signal (301a); and
   applying (420), by a controller (630) of the anchor device (302a-302n), a phase compensated DOA estimation to determine based on the received OFDM signal (301a) an estimate of the DOA comprising two angles of arrival and to compensate a phase shift caused by the sequential sampling of the signal.

14. A computer program (1046) comprising instructions, which, when the computer program (1046) is executed by an anchor device (302a-302n) according to any of claims 1 to 9, cause the anchor device (302a-302n) to carry out at least the steps of the method according to claim 13.

15. A tangible, non-transitory computer readable medium comprising the computer program (1046) according to claim 14.

**FIG. 1**

**FIG. 2**

**FIG. 3**

**FIG. 4**

410 Receiving an OFDM signal transmitted by tag device being localized

420 Estimating DOA and compensating phase shift

430 Sending the estimated DOA together with metadata to a central entity

440 Localizing the tag device

**FIG. 5**

**FIG. 6B**

**FIG. 6A**

**FIG. 6C**

**FIG. 6D**

**FIG. 7A**

FIG. 7B

## Subarray 1 (702)

$T_a^{(1)}$

## Subarray 2 (704)

$T_a^{(2)}$

## Subarray 3 (706)

$T_a^{(3)}$

$T_{act}$

Switch slot   $T_r$

| i | Sample slot for antenna element i   $T_r$

FIG. 7C

810 — | Determining estimates of frequency responses | 420

↓

820 — | Determining phase compensated frequency responses |

↓

830 — | Determining DOA information |

↓

840 — | Determining an estimate of a DOA |

**FIG. 8A**

832 — | Determining a sampled CSD matrix | 830

↓

834 — | Determining a signal subspace by applying a power method |

↓

836 — | Determining the DOA information |

**FIG. 8B**

500

$J_4 a(\theta_1, \phi_1)$

900a

$J_1 a(\theta_1, \phi_1)$

504

901

902

900b

903

$J_3 a(\theta_1, \phi_1)$

904

502

$J_2 a(\theta_1, \phi_1)$

**FIG. 9A**

500

$J_2a(\theta_1, \phi_1)$

900a

903

$J_5a(\theta_1, \phi_1)$

$J_6a(\theta_1, \phi_1)$

900b

901

902

904

$J_1a(\theta_1, \phi_1)$

**FIG. 9B**

302a-302n

Radio communicator
600

Antenna part
1036

Power supplier
1038

Controller
630

Processor
1032

Memory
1034

SP
700

CP
1046

PS
1044

RC
1042

**FIG. 10**

304a-304n

Radio communicator
1136

Antenna part
1138

Power supplier
1140

Controller
1130

Processor
1132

Memory
1134

CP
1146

PS
1144

RC
1142

**FIG. 11**

European Patent Office — Europäisches Patentamt — European Patent Office — Office européen des brevets

## EUROPEAN SEARCH REPORT

**Application Number**

EP 25 18 1004

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/040927 A1 (NOKIA SHANGHAI BELL CO LTD [CN] ET AL.) 3 March 2022 (2022-03-03) * paragraphs [0002], [0003], [0030], [0031], [0033], [0034], [0036], [0037] * * paragraphs [0039] - [0043], [0071], [0072], [0083] * ----- | 1-9, 11-15 | INV. G01S3/04 G01S3/14 G01S3/48 G01S3/74 G01S5/02 H04W64/00 |
| X | US 2021/302528 A1 (WANG JING [US]) 30 September 2021 (2021-09-30) * paragraphs [0023], [0027] - [0029], [0031], [0032], [0034] * * paragraphs [0049], [0052], [0053], [0055], [0058] * * paragraphs [0059], [0061], [0067], [0068], [0078], [0084] * ----- | 1-15 | |

TECHNICAL FIELDS SEARCHED (IPC)

G01S
H04W

The present search report has been drawn up for all claims

| Place of search | Date of completion of the search | Examiner |
|---|---|---|
| Munich | 16 September 2025 | Naddeo, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 1004

This annex lists the patent family members relating to the patent documents cited in  the above-mentioned European search report.
The members are as contained in the European Patent Office EDP file on
The European Patent Office is in no way liable for these particulars which are merely given for the purpose of information.

16-09-2025

| Patent document cited in search report | | Publication date | Patent family member(s) | | Publication date |
|---|---|---|---|---|---|
| WO 2022040927 | A1 | 03-03-2022 | CN | 115997430 A | 21-04-2023 |
| | | | WO | 2022040927 A1 | 03-03-2022 |
| US 2021302528 | A1 | 30-09-2021 | NONE | | |

EPO FORM P0459

For more details about this annex : see Official Journal of the European Patent Office, No. 12/82